# EUROPEAN PATENT APPLICATION

(11) **EP 4 529 186 A1**
(43) Date of publication of application: **26.03.2025**
(21) Application number: 22946949.9
(22) Date of filing: 15.06.2022
(51) Int. Cl.: H04N 21/422, H04Q 9/00

(54) **DISPLAY DEVICE, METHOD FOR CONTROLLING DISPLAY DEVICE, AND METHOD FOR CONTROLLING REMOTE CONTROL DEVICE**

(30) Priority: 14.06.2022 KR 20220072078
(71) Applicant: LG Electronics Inc., Yeongdeungpo-gu Seoul 07336 (KR)
(72) Inventor: LEE, Janghee, Seoul 06772 (KR); YU, Seonil, Seoul 06772 (KR)
(74) Representative: Vossius & Partner Patentanwälte Rechtsanwälte mbB
(86) International application number: PCT/KR2022/008468
(87) International publication number: WO 2023/243743

(57) **Abstract**

One embodiment of the present disclosure provides a display device characterized by comprising: a display which outputs content; a communication unit which communicates with a remote control device using Bluetooth; and a control unit which controls the communication unit, wherein the control unit transmits an ack response including connection and configuration information of a set-top box when a connection request is received from the remote control device.

## Description

### TECHNICAL FIELD

The present disclosure relates to a display device, a method of controlling the display device, and a method of controlling a remote control device that controls the display device.

### BACKGROUND

With the increasing development of information society, the demand for display devices is also increasing in various forms. In response to this trend, various display devices, for example, Liquid Crystal Display (LCD), Field Emission Display (FED), Plasma Display Panel (PDP), an electroluminescent device, etc. have recently been developed.

A liquid crystal panel of the LCD may include a liquid crystal layer, may further include a thin film transistor (TFT) substrate and a color filter substrate that are arranged to face each other on the basis of the liquid crystal panel interposed therebetween, and may display an image using light provided from a backlight unit.

As an example of an electroluminescent device, active-matrix-type organic light emitting display (OLED) devices are commercially available on the market and widely used throughout the world. Since the OLED device is a self-emitting device, the OLED device has no backlight and is advantageous in terms of a response speed and a viewing angle as compared to the LCD, so that the OLED devices are attracting attention as next-generation displays.

In order to control such a display device, a remote control device is used, and the remote control device and the display device are connected to each other by transmitting and receiving packets wirelessly. However, there are more and more wireless devices in the home in recent years, and the wireless environment is getting worse, thereby making packet loss inevitable.

### DISCLOSURE

### TECHNICAL PROBLEM

To address the above problem, the present disclosure provides a display device that provides connection and configuration information about a set-top box, a method of controlling the display device, and a method of controlling a remote control device.

### TECHNICAL SOLUTION

The present disclosure provides a display device including a display outputting content, a communication unit communicating with a remote control device by Bluetooth, and a controller controlling the communication unit. Upon receipt of a connection request from the remote control device, the controller transmits an ack response including connection and configuration information about a set-top box.

The connection and configuration information about the set-top box may include a codeset identification (ID) of the set-top box.

The remote control device may include a database, and the database may have a key index mapped to an input key included in the remote control device.

The controller may control the content based on an IR signal from the remote control device controlling the set-top box.

The present disclosure provides a method of controlling a display device, including receiving high duty advertising from a remote control device, transmitting a Bluetooth connection request to the remote control device, and transmitting an ack response including connection and configuration information about a set-top box to the remote control device.

The connection and configuration information about the set-top box may include a codeset ID of the set-top box.

The remote control device may include a database, and the database may have a key index mapped to an input key included in the remote control device.

The present disclosure provides a method of controlling a remote control device, including receiving an interrupt from a user, requesting a connection to the display device in response to the interrupt, receiving an ack response including connection and configuration information about a set-top box from the display device, decoding a key index based on the connection and configuration information about the set-top box, and outputting an IR signal corresponding to the key index.

The connection and configuration information about the set-top box may include a codeset ID of the set-top box.

The remote control device may include a database, and the database may have a key index mapped to an input key included in the remote control device.

### ADVANTAGEOUS EFFECTS

According to an embodiment of the present disclosure, immediate control of a remote control device is advantageously possible without RF transmission loss.

The effects obtainable from the present disclosure are not limited to the effects described above, and other effects not described may be clearly understood by those skilled in the art to which the present disclosure belongs from the description below.

### BRIEF DESCRIPTION OF THE DRAWINGS

FIG. 1 is a block diagram illustrating constituent elements of a display device according to an embodiment of the present disclosure.
FIG. 2 is a block diagram illustrating a system for controlling a display device according to an embodiment of the present disclosure.
FIGS. 3 and 4 are diagrams illustrating a conventional method of operating a remote control device and a display device.
FIGS. 5 and 6 are diagrams illustrating a method of operating a remote control device and a display device according to an embodiment of the present disclosure.
FIG. 7 is a diagram illustrating key indexes according to an embodiment of the present disclosure.
FIGS. 8A and 8B are diagrams illustrating a conventional connection flow between a remote control device and a display device.
FIGS. 9A and 9B are diagrams illustrating a connection flow between a remote control device and a display device according to an embodiment of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element may be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

On the other hand, the image display device described herein is, for example, an intelligent image display device implemented by adding a computer support function to a broadcast reception function, and further includes an Internet function or the like while sufficiently performing the broadcast reception function, so that the image display device may have user-friendly interfaces such as a handwriting input device, a touchscreen, or a spatial remote controller. Further, the image display device may support a wired or wireless Internet function by connecting to the Internet and a computer device, thereby performing e-mailing, web browsing, banking, or gaming. To implement these functions, the image display device may operate based on a standard general-purpose Operating System (OS).

Accordingly, the image display device according to the present disclosure is designed in a manner that various applications may be easily added to or deleted from a general-purpose OS kernel so that the image display device may perform various user-friendly functions. The image display device may be, for example, a network TV, a Hybrid broadcast broadband TV (HBBTV), a smart TV, etc. The image display device is applicable to a smartphone as needed.

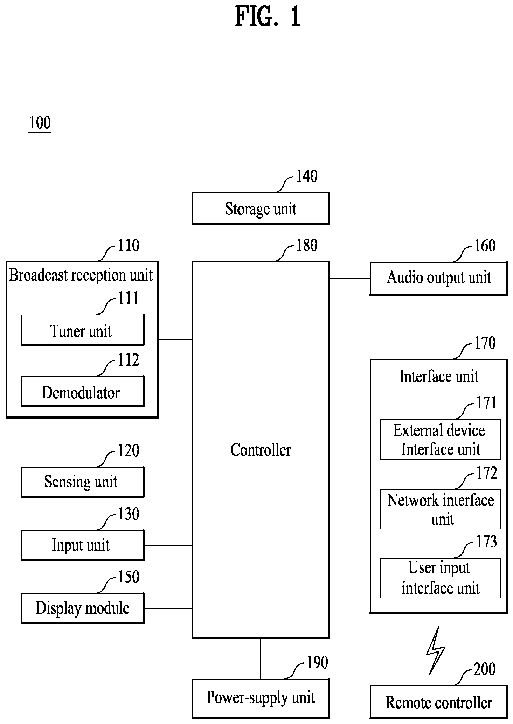

FIG. 1 is a block diagram illustrating constituent elements of a display device 100 according to an embodiment of the present disclosure.

Referring to FIG. 1, the display device 100 may include a broadcast reception unit 110, an external device interface unit 171, a network interface unit 172, a storage unit 140, a user input interface unit 173, an input unit 130, a controller 180, a display 150, an audio output unit 160, and/or a power-supply unit 190.

The broadcast reception unit 110 may include a tuner unit 111 and a demodulator 112.

Although not shown in the drawings, the display device 100 may include only the external device interface unit 171 and the network interface unit 172 from among the broadcast reception unit 110, the external device interface unit 171, and the network interface unit 172. That is, the display device 100 may not include the broadcast reception unit 110.

The tuner unit 111 may select a broadcast signal corresponding to either a user-selected channel or all prestored channels from among broadcast signals received through an antenna (not shown) or a cable (not shown). The tuner unit 111 may convert the selected broadcast signal into an intermediate frequency (IF) signal or a baseband image or a voice signal.

For example, when the selected broadcast signal is a digital broadcast signal, the tuner unit 111 may convert the selected broadcast signal into a digital IF (DIF) signal. When the selected broadcast signal is an analog broadcast signal, the tuner unit 111 may convert the selected broadcast signal into an analog baseband image or a voice signal (CVBS/SIF). That is, the tuner unit 111 may process the digital broadcast signal or the analog broadcast signal. The analog baseband image or the voice signal (CVBS/SIF) output from the tuner unit 111 may be directly input to the controller 180.

The tuner unit 111 may sequentially select broadcasting signals of all broadcasting channels stored through a channel memory function from among the received broadcast signals, and may convert the selected broadcast signal into an intermediate frequency (IF) signal or a baseband image or a voice signal.

The tuner unit 111 may include a plurality of tuners to receive broadcast signals of the plurality of channels. Alternatively, a single tuner for simultaneously receiving broadcast signals of the plurality of channels is also possible.

The demodulator 112 may receive the digital IF signal (DIF) converted by the tuner unit 111, and may thus perform demodulation of the received signal. The demodulator 112 may perform demodulation and channel decoding, and may output a stream signal (TS). The stream signal may be a signal formed by multiplexing an image signal, a voice signal, or a data signal.

The stream signal (TS) output from the demodulator 112 may be input to the controller 180. The controller 180 may perform demultiplexing, image/audio signal processing, etc., may output an image through the display 150, and may output a voice through the audio output unit 160.

The sensing unit 120 may sense a change in the display device 100 or may sense an external change. For example, the sensing unit 120 may include a proximity sensor, an illumination sensor, a touch sensor, an infrared (IR) sensor, an ultrasonic sensor, an optical sensor (e.g., a camera), a voice sensor (e.g., a microphone), a battery gauge, environmental sensors (e.g., hygrometer, a thermometer, etc.).

The controller 180 may check a state of the display device 100 based on information collected by the sensing unit 120, may notify the user of a problem, or may control the display device 100 to be kept in the best state.

In addition, it is possible to provide an optimal viewing environment by differently controlling the content, image quality, size, etc. of the image provided to the display module 180 depending on the viewer, ambient illuminance, etc. sensed by the sensing unit. As the smart TV has evolved, the number of functions mounted in the display device increases, and the number of the sensing units 20 also increases together with the increasing functions.

The input unit 130 may be provided at one side of a main body of the display device 100. For example, the input unit 130 may include a touch pad, a physical button, and the like. The input unit 130 may receive various user commands related to the operation of the display device 100, and may transmit a control signal corresponding to the input command to the controller 180.

Recently, as a bezel of the display device 100 decreases in size, the number of display devices 100 each including a minimum number of input unit 130 formed in a physical button exposed to the outside is rapidly increasing. Instead, a minimum number of physical buttons may be provided on the back or side surface of the display device 100. The display device may receive a user input through the remote controller 200 through a touchpad or a user input interface unit 173 to be described later.

The storage unit 140 may store a program for processing and controlling each signal used in the controller 180, and may store a signal-processed image, a voice, or a data signal. For example, the storage unit 140 may store application programs designed for the purpose of performing various tasks that may be processed by the controller 180, and may selectively provide some of the stored application programs upon request of the controller 180.

The program stored in the storage unit 140 is not specifically limited to being executed by the controller 180. The storage unit 140 may perform a function for temporarily storing an image, a voice, or a data signal received from an external device through the external device interface unit 171. The storage unit 140 may store information about a predetermined broadcast channel through a channel memory function such as a channel map.

Although the storage unit 140 of FIG. 1 is provided separately from the controller 180, the scope of the present disclosure is not limited thereto, and the storage unit 140 may also be included in the controller 180 as needed.

The storage unit 140 may include at least one of a volatile memory (e.g., DRAM, SRAM, SDRAM, etc.) and a non-volatile memory (e.g., flash memory, hard disk drive (HDD), solid state drive (SSD), etc.).

The display 150 may generate a drive signal by converting an image signal, a data signal, an OSD signal, a control signal processed by the controller 180, or by converting an image signal, a data signal, a control signal, etc. received from the interface unit 171. The display 150 may include a display panel 181 having a plurality of pixels.

A plurality of pixels included in the display panel may include RGB sub-pixels. Alternatively, a plurality of pixels included in the display panel may include sub-pixels of RGBW. The display 150 may convert the image signal, the data signal, the OSD signal, the control signal, etc. processed by the controller 180 to generate a drive signal for the plurality of pixels.

The display 150 may be implemented as a plasma display panel (PDP), a liquid crystal display (LCD), an organic light emitting diode (OLED), a flexible display, etc. In addition, the display 150 may also be implemented as a three-dimensional (3D) display. The three-dimensional (3D) display 150 may be classified into a glassless-type 3D display and a glasses-type 3D display.

The display device may include a display module that occupies most parts of the front surface, and a case that covers the back and side surfaces of the display module and packages the display module.

Recently, the display device 100 has evolved from a flat-screen display to a curved-screen display. In order to implement the curved screen, the display device 100 may use a display module 150 that may be bent or curved, such as a light emitting diode (LED) or an organic light emitting diode (OLED), etc.

Conventionally, the LCD has difficulty in self-emitting light, so that the conventional LCD has been designed to receive light through a backlight unit. The backlight unit is a device for uniformly supplying light received from a light source to a liquid crystal located on the front surface of the display device. As the backlight becomes thinner, a thin LCD may be implemented. However, it is actually difficult for the backlight unit to be implemented as a curved structure formed of a flexible material. Although the backlight unit is implemented as a curved shape, it is difficult for light to be uniformly applied to the liquid crystal, thereby changing brightness of the screen.

On the other hand, the LED or the OLED is designed in a manner that each of constituent elements constructing the pixels may self-emit light without using the backlight unit, so that the LED or the OLED may be implemented as a curved shape without any problems. In addition, since each element may perform self-emission of light, brightness of each element is not affected by a change in the positional relationship between the element and adjacent elements, so that a curved display module 150 may be implemented as an LED or OLED.

OLED (Organic Light Emitting Diode) panels appeared in earnest in mid-2010 and are rapidly replacing LCDs in the small- and medium-sized display market. The OLED is a display made using the self-emission characteristics in which OLED emits light when a current flows in a fluorescent organic compound. Since the response speed of the OLED is faster than that of the LCD, there is little afterimage when moving images are implemented.

OLEDs may be used as a light-emitting display product. In this case, the light-emitting display device may use three fluorescent organic compounds (such as red, green, and blue) each having a self-emitting function, and may use the self-emitting phenomenon in which positive(+)-charged particles and electrons injected from a cathode and anode are combined with each other within the organic material, so that a backlight unit causing degradation of color sense need not be used.

The LED panel is implemented by technology for using only one LED element as one pixel, and has a smaller LED element compared to the prior art, so that a curved display module 150 may be implemented. Whereas the conventional device referred to as an LED TV may use the LED as a light source of the backlight unit for supplying light to the LCD, it is impossible for the LED of the conventional device to constitute a screen.

The display module may include a display panel, a coupling magnet located on the rear surface of the display panel, a first power-supply unit, and a first signal module. The display panel may include a plurality of pixels (R, G, B). The plurality of pixels (R, G, B) may be formed in each region where a plurality of data lines and a plurality of gate lines cross each other. The plurality of pixels (R, G, B) may be arranged in a matrix.

For example, the plurality of pixels (R, G, B) may include a red(R) sub-pixel, a green(G) sub-pixel, and a blue(B) sub-pixel. The plurality of pixels (R, G, B) may further include white (W) sub-pixel(s).

In the display module 150, one side where an image is displayed may be referred to as a front side or a front surface. When the display module 150 displays an image, one side where no image is observed may be referred to as a rear side or a rear surface.

Meanwhile, the display 150 may be implemented as a touchscreen, so that the display 150 may also be used as an input device in addition to an output device.

The audio output unit 160 may receive a voice-processed signal from the controller 180, and may output the received signal as a voice signal.

The interface unit 170 may serve as a path of connection to various kinds of external devices connected to the display device 100. The interface unit may include not only a wired method for transmitting/receiving data through a cable, but also a wireless method using the antenna.

The interface unit 170 may include at least one of a wired/wireless headset port, an external charger port, a wired/wireless data port, a memory card port, a port connected to a device having an identification module, an audio input/output (I/O) port, a video I/O port, and an earphone port.

As an example of a wireless method, the above-described broadcast reception unit 110 may be used. The broadcast reception unit 110 may be configured to use a broadcast signal, a mobile communication short-range communication signal, a wireless Internet signal, and the like.

The external device interface unit 171 may transmit or receive data to and from a connected external device. To this end, the external device interface unit 171 may include an A/V input/output (I/O) unit (not shown).

The external device interface unit 171 may be wired or wirelessly connected to an external device such as a digital versatile disc (DVD) player, a Blu-ray player, a game console, a camera, a camcorder, a computer (laptop), a STB, or the like, and may perform an input/output (I/O) operation with the external device.

In addition, the external device interface unit 171 may establish a communication network with various remote controllers 200, may receive a control signal related to operation of the display device 100 from the remote controller 200, or may transmit data related to operation of the display device 100 to the remote controller 200.

The external device interface unit 171 may include a wireless communication unit (not shown) for short-range wireless communication with other electronic devices. Through the wireless communication unit (not shown), the external device interface unit 171 may exchange data with an adjacent mobile terminal. In particular, the external device interface unit 171 may receive device information, application information, an application image, and the like from the mobile terminal in a mirroring mode.

The network interface unit 172 may provide an interface for connecting the display device 100 to a wired/wireless network including the Internet network. For example, the network interface unit 172 may receive content or data provided by the Internet, a content provider, or a network administrator through a network. The network interface unit 172 may include a communication module (not shown) for connection with the wired/wireless network.

The external device interface unit 171 and/or the network interface unit 172 may include a communication module for short-range communication such as Wi-Fi, Bluetooth, Bluetooth low energy (BLE), ZigBee, Near Field Communication (NFC), and a communication module for cellular communication such as Long-Term Evolution (LTE), LTE-A (LTE Advanced), Code Division Multiple Access (CDMA), WCDMA (wideband CDMA), UMTS (universal mobile telecommunications system), WiBro (Wireless Broadband), etc.

The user input interface unit 173 may transmit user input signals to the controller 180, or may transmit signals received from the controller 180 to the user. For example, the user input interface unit 173 may transmit or receive user input signals (such as a power-on/off signal, a channel selection signal, and a screen configuration signal) to and from the remote controller 200, may transmit user input signals received through a local key (not shown) such as a power key, a channel key, a volume key, and a configuration key to the controller 180, may transmit a user input signal received by a sensor unit (not shown) for sensing a user gesture to the controller 180, or may transmit a signal received from the controller 180 to the sensor unit.

The controller 180 may include at least one processor, and may control the overall operation of the display device 100 using the processor included therein. Here, the processor may be a general processor such as a CPU. Of course, the processor may be a dedicated device such as an ASIC, or other hardware-based processor.

The controller 180 may demultiplex the stream received through the tuner unit 111, the demodulator 112, the external device interface unit 171, or the network interface 172, and may process the demultiplexed signals to generate and output a signal for image or voice output.

The image signal processed by the controller 180 may be input to the display 150 and displayed as an image corresponding to the corresponding image signal. In addition, the image signal processed by the controller 180 may be input to the external output device through the external device interface unit 171.

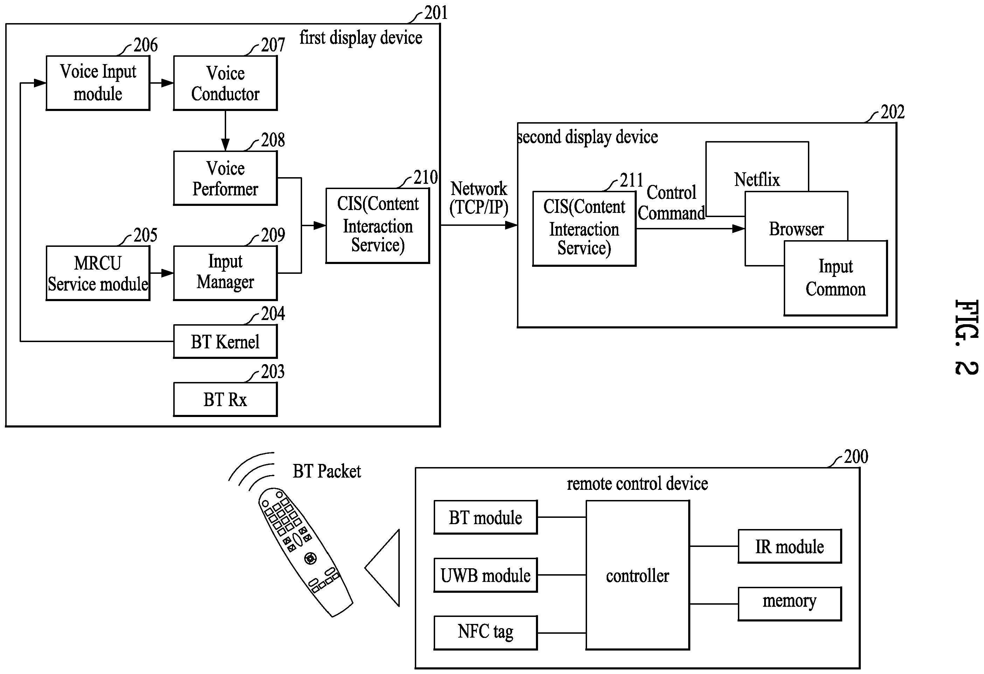

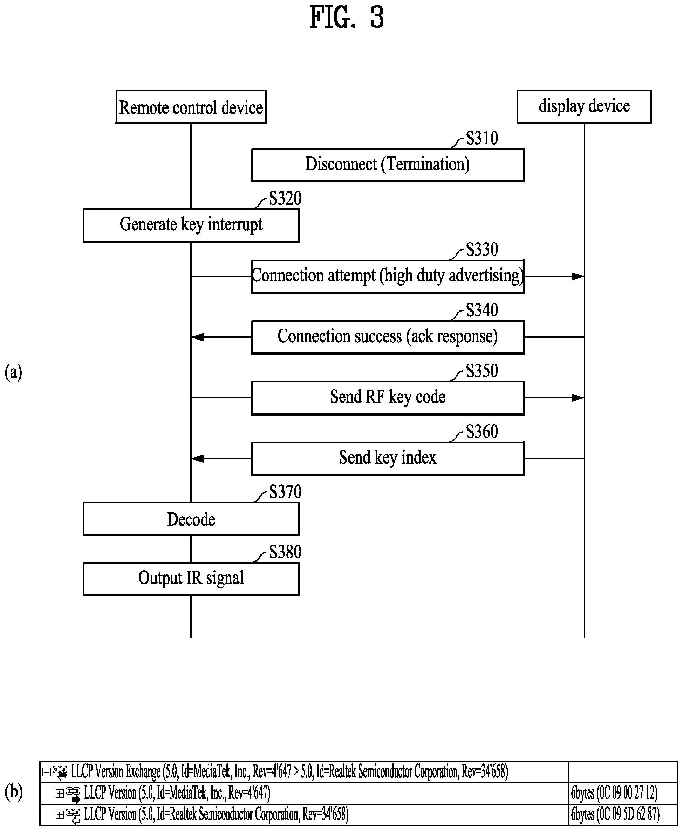

The voice (or audio) signal processed by the controller 180 may be audibly output to the audio output unit 160. In addition, the voice signal processed by the controller 180 may be input to the external output device through the external device interface unit 171. Although not shown in FIG. 2, the controller 180 may include a demultiplexer, an image processor, and the like, and a detailed description thereof will hereinafter be described with reference to FIG. 3.

In addition, the controller 180 may control the overall operation of the display device 100. For example, the controller 180 may control the tuner unit 111 to select a broadcast program corresponding to either a user-selected channel or a prestored channel.

In addition, the controller 180 may control the display device 100 by a user command or an internal program received through the user input interface unit 173. The controller 180 may control the display 150 to display an image. In this case, the image displayed on the display 150 may be a still image or a moving image, and may be a 2D image or a 3D image.

On the other hand, the controller 180 may display a predetermined 2D object in the image displayed on the display 150. For example, the object may be at least one of a connected web screen (newspaper, magazine, etc.), electronic program guide (EPG), various menus, widgets, icons, still images, moving images, and text.

Meanwhile, the controller 180 may modulate and/or demodulate the signal using an amplitude shift keying (ASK) scheme. Here, the ASK scheme may refer to a method for modulating a signal by differentiating the amplitude of a carrier wave according to data values or for restoring an analog signal to a digital data value according to the amplitude of the carrier wave.

For example, the controller 180 may modulate an image signal using the ASK scheme, and may transmit the modulated signal through a wireless communication module.

For example, the controller 180 may demodulate and process the image signal received through the wireless communication module using the ASK scheme.

Accordingly, the display device 100 may simply transmit and receive signals to and from other image display devices arranged adjacent to each other without using either a unique identifier such as a Media Access Control (MAC) address or a complex communication protocol such as TCP/IP.

On the other hand, the display device 100 may further include a photographing unit (not shown). The photographing unit may photograph a user. The photographing unit may be implemented as one camera, but is not limited thereto, and may be implemented by a plurality of cameras. On the other hand, the photographing unit may be embedded in the display device 100 or may be separately arranged on the display 150. The image information photographed by the photographing unit may be input to the controller 180.

The controller 180 may recognize the position of the user based on the image photographed by the photographing unit. For example, the controller 180 may recognize a distance (z-axis coordinates) between the user and the display device 100. In addition, the controller 180 may recognize the X-axis coordinate and the Y-axis coordinate within the display 150 corresponding to the user position.

The controller 180 may sense a user gesture based on an image photographed by the photographing unit, each of signals detected by the sensor unit, or a combination thereof.

The power-supply unit 190 may supply corresponding power to the display device 100. In particular, the controller 180 may be implemented as a System on Chip (SoC), a display 150 for displaying an image, and an audio output unit 160 for audio output.

Specifically, the power-supply unit 190 may include a converter (not shown) for converting AC power into DC power, and a DC/DC converter (not shown) for converting the level of DC power.

On the other hand, the power-supply unit 190 may receive power from the external power source, and may distribute the received power to the respective components. The power-supply unit 190 may be directly connected to the external power source to supply AC power, and may include a battery capable of being charged with electricity.

In the former case, the power-supply unit 190 may be used by connecting to a wired cable, and it is difficult for the power-supply unit 190 to move from one place to another place, and the movement range of the power-supply unit 190 is limited. In the latter case, the power-supply unit 190 may move from one place to another place, but the weight and volume of the power-supply unit 190 may increase as much as the weight and volume of the battery. In addition, for charging, the power-supply unit 190 should be directly connected to a power cable for a predetermined period of time or should be coupled to a charging cradle (not shown) for power supply.

The charging cradle may be connected to the display device through a terminal exposed to the outside. Alternatively, if the power-supply unit 190 approaches the charging cradle using a wireless interface, a built-in battery of the power-supply unit 190 may also be charged with electricity.

The remote controller 200 may transmit a user input to the user input interface unit 173. To this end, the remote controller 200 may use Bluetooth, Radio Frequency (RF) communication, infrared (IR) communication, Ultra-Wideband (UWB), ZigBee, or the like. In addition, the remote controller 200 may receive the image, voice, or data signal output from the user input interface unit 173, and may display or audibly output the received image, voice, or data signal.

On the other hand, the above-described display device 100 may be a fixed or mobile digital broadcast receiver capable of receiving digital broadcast signals.

Meanwhile, the block diagram of the display device 100 shown in FIG. 1 is disclosed for only for illustrative purposes for an embodiment of the present disclosure, and the respective components of the display device 100 shown in FIG. 1 may be integrated, added or omitted according to the specifications of the digital device 100 which is actually implemented.

That is, if necessary, two or more components may be combined into one component, or one component may be subdivided into two or more components. In addition, the functions performed in each block are intended to explain the embodiment of the present disclosure, and the specific operation or device does not limit the scope of the present disclosure.

FIG. 2 is a block diagram illustrating a system for controlling a display device according to an embodiment of the present disclosure. A redundant description to the above description will be avoided herein.

Referring to FIG. 2, operations of a remote control device 200, a first display device 201, and a second display device 202 in the system for controlling a display device according to an embodiment will be described. The first display device 201 may correspond to a display device to which a UWB function and a Bluetooth function are applied, and the second display device 202 may correspond to a display device to which only a UWB function is applied. Different functions may be applied to the first display device 201 and the second display device 202, which may vary depending on embodiments described below.

The remote control device 200 includes a near field communication (NFC) tag, a UWB module, a Bluetooth module, an IR module, a memory, a controller, and so on. However, it is also possible to add or delete some modules according to the needs of those skilled in the art.

The NFC tag may correspond to a tag for performing NFC communication technology. In the NFC communication technology, NFC communication is performed by tagging within a short range. One of wireless tag technologies, NFC is a non-contact communication technology using a frequency band of 13.56MHz. NFC is a next-generation short-range communication technology attracting interest because it is relatively secure and inexpensive due to its short communication distance, it allows use of both data reading and writing functions, and it obviates a device-to-device configuration unlike Bluetooth despite its similarity to existing short-range communication technologies such as Bluetooth.

Further, the UWB module refers to a wireless communication technology that enables data transmission and reception through a wireless connection to a PC, a peripheral, or a home appliance in a limited space such as an office or home. The UWB module may use short pulses for communication, and transmit information at a high rate of hundreds of Mbps within a short distance of 10m in a wide frequency band of about 500MHz with a very low power density.

Further, the Bluetooth module performs pairing between the remote control device and a display device, and transmits and receives data. Bluetooth, which is one of short-range wireless communication standards, refers to a technical standard that wirelessly connects/controls various electronic and information and communication devices within a radius of 10 to 100m in a frequency of 2.45GHz. Bluetooth offers the benefit that data may be transmitted and received at a high rate using a radio frequency without a physical cable between information and communication devices such as computers, printers, mobile phones, PDAs, and various digital home appliances in homes or offices. Further, it may be assumed that a pairing operation to be described later is performed through the Bluetooth module.

Further, the IR module may transmit an IR signal to a display device, and the memory stores network information and Bluetooth information about the display device that the remote control device receives from the display device through NFC communication.

Finally, the controller transmits and receives information and control signals to and from the first display device and the second display device. In this regard, a more detailed description will be given later with reference to FIGS. 3 to 18.

Further, it may be assumed that the first display device 201 and the second display device 202 may communicate with each other through a network.

In an embodiment, when the remote control device 200 transmits a Bluetooth signal to the first display device 201, a Bluetooth receiver 203 of the first display device 201 may transmit various signals of the remote control device 200 to each module through a Bluetooth kernel 204.

More specifically, a control signal for a button input signal or cursor input signal received from the remote control device 200 may be transmitted to an input manager 209 through an MRCU service module 205. MRCU is called a magic motion remote controller or a magic remote controller, and refers to the remote control device 200 that recognizes a motion by a cursor or wheel motion like a PC mouse. Particularly, this remote control device 200 is capable of voice recognition, such as Amazon Alexa, Google Assistant, and LG ThinQ. Further, in the case of voice recognition through the remote control device 200, a user speaks a control command into a microphone part, simultaneously with pressing a voice button of the remote control device 200, and a content interaction service (CIS) 210 is enabled by the command through a voice conductor 207 and a voice performer 208. In an embodiment, the voice performer 208 may convert a voice signal received from the remote control device 200 into a control signal for the display device.

Further, the voice signal received from the remote control device 200 may be transmitted to the voice conductor 207 through a voice input module 206.

In this manner, a control signal received from the remote control device 200 is transmitted to the CIS 210 through the voice performer 208 and the input manager 209 of the first display device 201.

In an embodiment, the CIS 210 of the first display device 201 may transmit a control signal of the remote control device 200 to a CIS 211 of the second display device 202 through the network. Upon receipt of the control signal, the second display device 202 may perform an operation corresponding to the control signal based on the CIS 211.

Accordingly, the remote control device 200 may transmit a control signal to the first display device 201, and the first display device 201 may determine and analyze the control signal of the remote control device 200 using various modules included therein, and transmit a result to the second display device 202 through the network. Then, the second display device 202 may perform an operation based on the received control signal.

That is, the user may achieve the same effect as controlling the unpaired second display device 202 by controlling the remote control device 200 paired with the first display device 201. In addition, it is assumed that the remote control device 200 is capable of all of UWB communication, Bluetooth communication, and NFC communication.

In an operation as an integrated remote control device for controlling a set-top box (STB), the remote control device described above with reference to FIGS. 1 and 2 transmits a key value via a Bluetooth RF after a connection is established with a display device through a connection process. Further, when the display device is connected to the STB and the integrated remote control device has been set, the remote control device decodes a corresponding key value of the STB and outputs a decoded IR signal to control the STB, only after the display device transmits a key index of the STB to the remote control device via the Bluetooth RF.

In this case, the key index is transmitted late due to a poor RF environment or RF transmission loss in some cases, thereby delaying the output of the IR signal from the remote control device. Moreover, the remote control device should be directed to the STB as long as the delay. Otherwise the STB may not recognize the remote control device.

Further, the remote control device quickly connects to the display device through high duty advertising by a motion input or a key input, and the connection is made mostly through a motion with a wake on motion (WoM) function. Therefore, as a response indicating that the STB has been connected and configured is transmitted in an ack packet during the connection process, the remote control device may output a corresponding key value as an IR signal to directly operate the STB without RF transmission loss during an actual key operation, thereby controlling the STB.

An embodiment of the present disclosure proposes a direct integrated remote control device through direct control of an STB without RF transmission loss, when the STB is controlled using a remote control device.

In a scenario, the remote control device transmits a key value through RF communication with the display device, receives a key index, decodes the corresponding value, and outputs a decoded IR signal, thereby controlling the STB.

That is, after the remote control device and the display device are connected, the remote control device may transmit a key packet to the display device, receive a key index from the display device, and output an IR signal.

In the conventional method, the remote control device should be directed to the STB until the IR signal is output, due to a poor RF environment or RF transmission loss.

According to an embodiment of the present disclosure, immediate control of the remote control device is possible by eliminating RF transmission loss involved from key pressing on the remote control device to output of an IR signal.

More specifically, when a response indicating that STB connection and configuration have been performed is received in an ack packet during the connection process caused by a motion of the remote control device in the conventional operation method, RF transmission loss with the remote control device may be eliminated because the key index is fixed. Accordingly, a quick response may be induced by minimizing a time taken to output an IR signal.

In an embodiment, the display device may identify an external input to which the STB is connected. Besides, the display device may also identify which product the STB connected to the remote control device is.

Packets transmitted and received during the connection process between the remote control device and the display device may be configured to additionally include request and response packets including information about the STB and indicating that they are connected. When an ack response is transmitted, the remote control device may prepare to autonomously perform decoding of a UEI IR database, determining that they are connected.

In view of the nature of codesets in the UEI IR database, key indexes are fixed and thus do not change, and the number of keys controlled by the remote control device is approximately 20. Accordingly, when the keys are configured in this way, the remote control device may quickly output an IR signal through decoding based on index mapping.

Therefore, the problem that the remote control device should be directed to the STB until it outputs an IR signal due to a poor RF environment or RF transmission loss may be prevented.

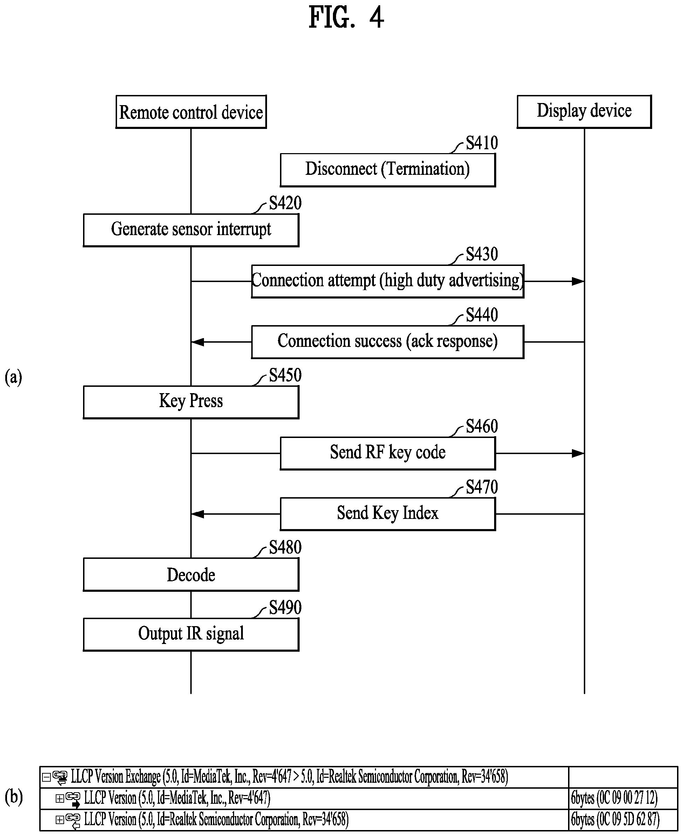

FIGS. 3 and 4 are diagrams illustrating a conventional method of operating a remote control device and a display device.

FIG. 3 illustrates an embodiment in which a conventional remote control device is connected to a display device by a key input method, and FIG. 4 illustrates an embodiment in which a conventional remote control device is connected to a display device by a motion input method.

When the remote control device is configured for a display device with WebOS built therein, the remote control device may store a database. The remote control device may attempt a connection using a key interrupt or a motion interrupt generated from a motion sensor. Then, the remote control device is designed to be connected to the display device and may only know whether the connection is successful.

After the remote control device and the display device are connected, the remote control device may transmit a key value for which an interrupt occurred from the display device in an RF packet, and receive an index of the corresponding key value in an RF packet from the display device. The remote control device may search for a corresponding key in the initially stored database by the key index received in the RF packet and output an IR signal to the STB, thereby controlling the STB.

Referring to FIG. 3(a), the remote control device and the display device are in a disconnected or termination state in step S310, and a key interrupt for selecting a channel may be generated from the remote control device in step S320.

Accordingly, in step S330, the remote control device may attempt to connect to the display device. Herein, high duty advertising may be performed.

In step S340, when the connection is successful, the remote control device may receive information indicating whether the connection is successful (e.g., an ack response) from the display device.

After the remote control device and the display device are connected, the remote control device may transmit a key value for which an interrupt has been generated in an RK packet to the display device in step S350. That is, the remote control device may transmit a key code in an RF packet to the display device.

In step S360, the display device may transmit the index of the key value received in the RF packet through an RF packet. That is, the display device may transmit the key index to the remote control device in the RF packet.

In step S370, the remote control device may decode a corresponding key value of the STB based on the key index received in the RF packet.

In step S380, the remote control device may control the STB by outputting an IR signal based on decoded information.

When the Bluetooth module is activated, the remote control device and the display device perform advertising for a Bluetooth connection. For this purpose, the remote control device and the display device may transmit and receive data packets.

In the Bluetooth technology, a short data packet is generally used. To use an extended packet, one of connected devices may request data packet extension, and for this purpose, it should identify whether the counterpart device supports the extended data packet.

To this end, the remote control device and the display device perform various requests and responses to each other, and in this process, information such as FIG. 3(b) may be transmitted and received.

FIG 3(b) illustrates information of LLCP Version Exchange as an example. When the remote control device requests an LLCP Version from the display device, the display device may respond with the LLCP Version. In this process, the remote control device may transmit information such as "0C 09 46 00 27 12" of 6bytes to the display device, and the display device may transmit information such as "0C 09 5D 00 62 87" of 6 bytes to the remote control device.

Although it is similar to FIG. 3, FIG. 4 illustrates an embodiment in which a conventional remote control device is connected to a display device using a motion input method. That is, since the user controls the display device by a key input or motion input of the remote control device, both embodiments will be described.

Referring to FIG. 4(a), the remote control device and the display device are in a disconnected or termination state in step S410, and an interrupt of detecting a motion may be generated from a motion sensor of the remote control device in step S420.

Accordingly, the remote control device may attempt to connect to the display device in step S430. Herein, high duty advertising may be performed.

In step S440, when the connection is successful, the remote control device may receive information indicating whether the connection is successful (e.g., an ack response) from the display device.

After the remote control device and the display device are connected, the remote control device may receive a key input for selecting a channel button from the user in step S450.

In step S460, the remote control device may transmit a key value corresponding to the key input that caused the interrupt to the display device in an RK packet. That is, the remote control device may transmit a key code (key index) to the display device in an RF packet.

In step S470, the display device may transmit a key index corresponding to the key value received in the RF packet through an RF packet. That is, the display device may transmit the key index in the RF packet to the remote control device.

In step S480, the remote control device may decode a corresponding key value of the STB based on the key index received in the RF packet.

In step S490, the remote control device may control the STB by outputting a decoded IR signal.

Since FIG. 4(b) corresponds to the same information as FIG. 3(b), its description will be omitted.

According to the embodiments of FIGS. 3 and 4, whenever a key is input, the remote control device transmits a corresponding key code to the display device, receives a key index, decodes the key, and outputs an IR signal. In this case, there is a problem that a time until the remote control device outputs the IR signal is delayed due to a poor RF environment or RF transmission loss, as described above.

In order to overcome this shortcoming, the following embodiments are proposed.

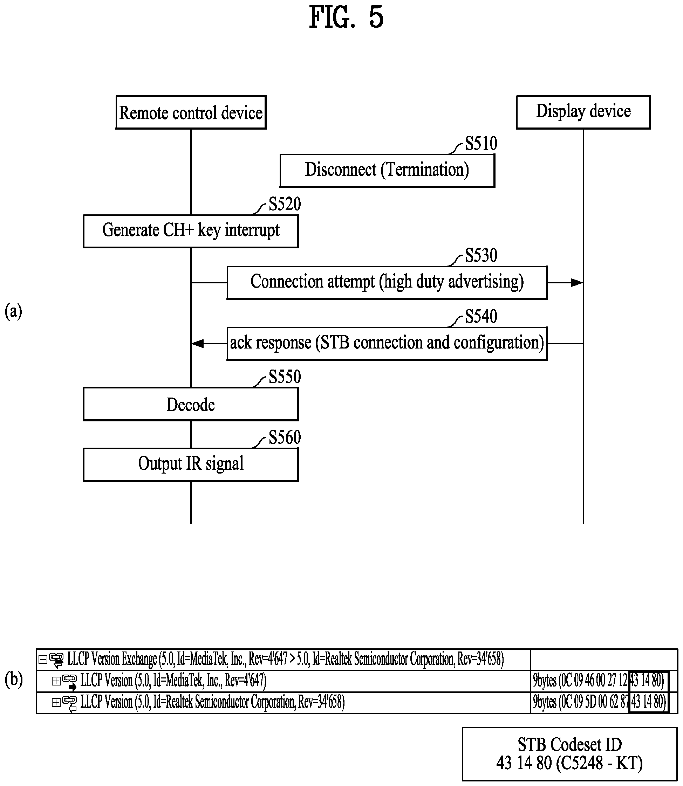

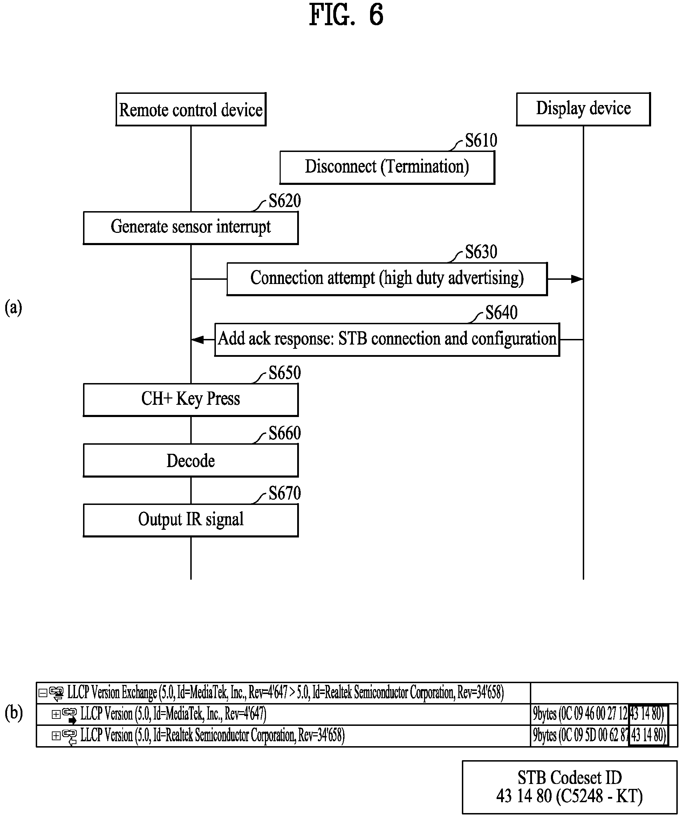

FIGS. 5 and 6 are diagrams illustrating a method of operating a remote control device and a display device according to an embodiment of the present disclosure. A redundant description to the foregoing description will be avoided.

With a WebOS-based display device configured with a remote control device, the remote control device may store a database. The remote control device may attempt a connection using a key interrupt or a motion interrupt generated from the motion sensor.

In an embodiment of the present disclosure, the display device may transmit STB information during a period in which it first transmits a packet during a connection process between the display device and the remote control device. Then, during a connection attempt, the remote control device may receive the STB information from the display device and, in response, indicate that the remote control device may decode the STB information. When an ack response is transmitted, the remote control device may identify data of the packet, retrieve a corresponding key from the initially stored database based on a corresponding key index without separate RF transmission loss, and immediately output an IR signal to the STB, thereby controlling the STB.

In an embodiment, about 20 keys including Channels, Digits (0 to 9), Colors, and Previous may be set from the beginning by index mapping, using databases corresponding to IR signals stored in the remote control device.

FIG. 5 illustrates an embodiment in which a remote control device according to an embodiment of the present disclosure is connected to a display device in a key input method, and FIG. 6 illustrates an embodiment in which a remote control device is connected to a display device in a motion input method.

Referring to FIG. 5(a), the remote control device and the display device are in a disconnected or termination state in step S510, and a key interrupt for selecting a channel may be generated from the remote control device in step S520.

In step S530, the remote control device may attempt to connect to the display device. Herein, high duty advertising may be performed.

The feature of the present disclosure lies in that step S540 is performed in a different manner from FIGS. 3 and 4. The remote control device may receive an ack response from the display device, and in an embodiment of the present disclosure, it also receives connection and configuration information about the SB. In an embodiment, the connection and configuration information about the STB may include a codeset identification (ID). This will be described in detail with reference to FIG. 5(b).

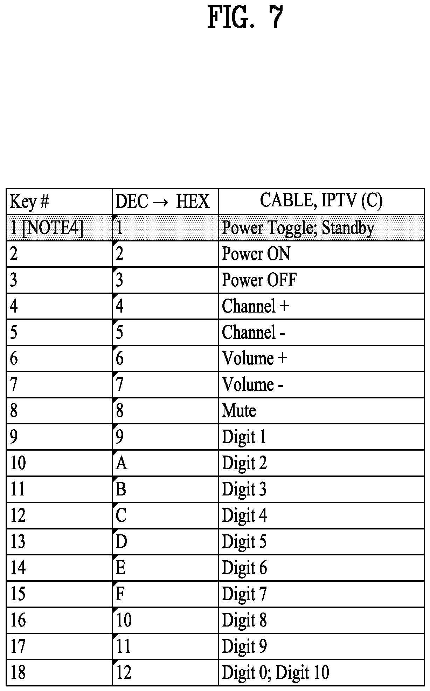

In step S550, the remote control device may decode an input key based on the received connection and configuration information about the STB. This will be described in detail with reference to FIG. 7.

In step S560, the remote control device may control the STB by outputting an IR signal based on decoded information.

Referring to FIG. 5(b), information of LLCP Version Exchange is illustrated as an example. When the remote control device requests an LLCP Version from the display device, the display device may respond with the LLCP Version. Compared to the afore-described case, the display device may transmit the connection and configuration information about the STB together with information about the LLCP Version in this case.

More specifically, when the remote control device transmits information about the LLCP Version to the display device, it may additionally transmit "43 14 80," which is a codeset ID of the STB, after the existing "0C 09 46 00 27 12."

Accordingly, when the display device transmits information about the LLCP Version to the remote control device, it may additionally transmit "43 14 80," which is the codeset ID of the STB, after the existing "0C 09 5D 00 62 87."

The codeset ID of the STB, "43 14 80," may include, for example, information about the manufacturer of the STB and information about the product of the STB.

Referring to FIG. 6(a), when the remote control device and the display device are in a disconnect or termination state in step S610, an interrupt of detecting a motion may be generated from the motion sensor of the remote control device in step S620.

Accordingly, in step S630, the remote control device may attempt to connect to the display device. Herein, high duty advertising may be performed.

In step S640, the remote control device may receive an ack response from the display device, and in an embodiment of the present disclosure, it also receives connection and configuration information about an STB. In an embodiment, the connection and configuration information about the STB may include a codeset ID.

After the remote control device and the display device are connected, the remote control device may receive a key input for selecting a channel button from the user in step S650.

In step S660, the remote control device may decode the input key based on the received connection and configuration information about the SB. This will be described in detail with reference to FIG. 7.

In step S670, the remote control device may control the STB by outputting an IR signal based on decoded information.

Since FIG. 6(b) corresponds to the same information as FIG. 5(b), its description will be omitted.

That is, when the methods of FIGS. 5 and 6 are used, the step of transmitting a key code to the display device and receiving a key index by the remote control device may be dropped, unlike FIGS. 3 and 4. Accordingly, the remote control device may control the display device more safely and more quickly in a situation where the wireless communication environment is poor or there is a risk of packet loss.

FIG. 7 is a diagram illustrating key indexes according to an embodiment of the present disclosure.

The key indexes of FIG. 7 may be stored in a database of the remote control device. Characteristically, inputtable key values of the remote control device are mapped to recognized key indexes of the STB in the database. Further, the key indexes of FIG. 7 are characteristically fixed according to the manufacturer/product of the STB.

In FIG. 7, the first column represents key numbers, the second column represents hexadecimal numbers converted from decimal numbers, and the third column represents input key indexes in a cable TV or IP TV.

More specifically, referring to FIG. 7, key number "2" may represent "Power ON" for the cable or IP TV, key number "7" may represent "Volume -" for the cable or IP TV, and key number "17" may represent "Digit 9" for the cable or IP TV.

That is, the remote control device may directly perform decoding using a key value mapped to the connected STB by referring to the stored database, and then output an IR signal for controlling the STB.

Particularly, since the key index values are fixed depending on the manufacturer/product of the STB as described above, when the remote control device stores a database according to the manufacturer/product of the STB, it may directly decode a key value without receiving a new key index from the display device each time.

For example, in the case of a "C5248-KT" product having an STB codeset ID "43 14 80" described with reference to FIGS. 5 and 6, the display device may already transmit the codeset ID of the STB to the remote control device during a Bluetooth connection. Accordingly, the remote control device may search a database corresponding to "43 14 80" among stored databases and then directly decode a key value according to a key input value of the remote control device.

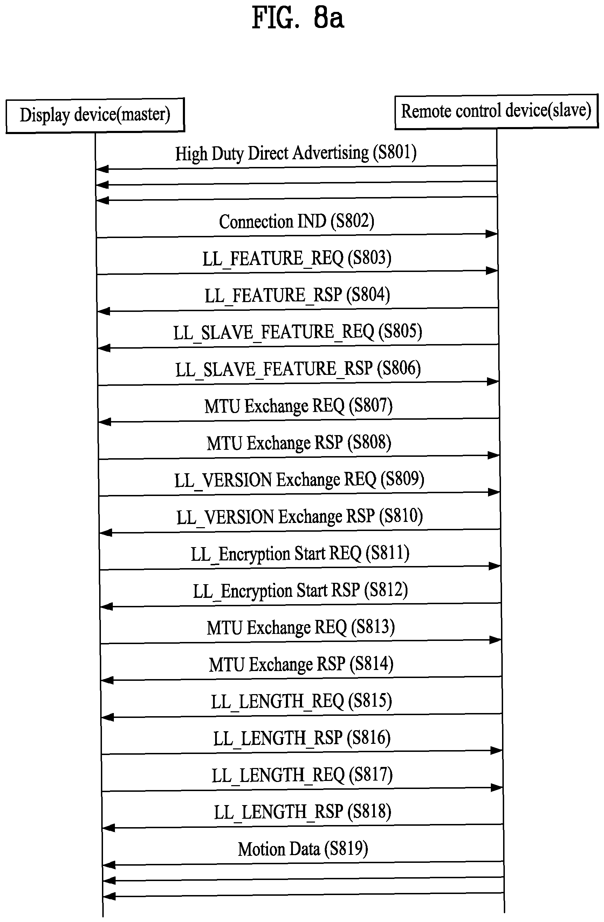

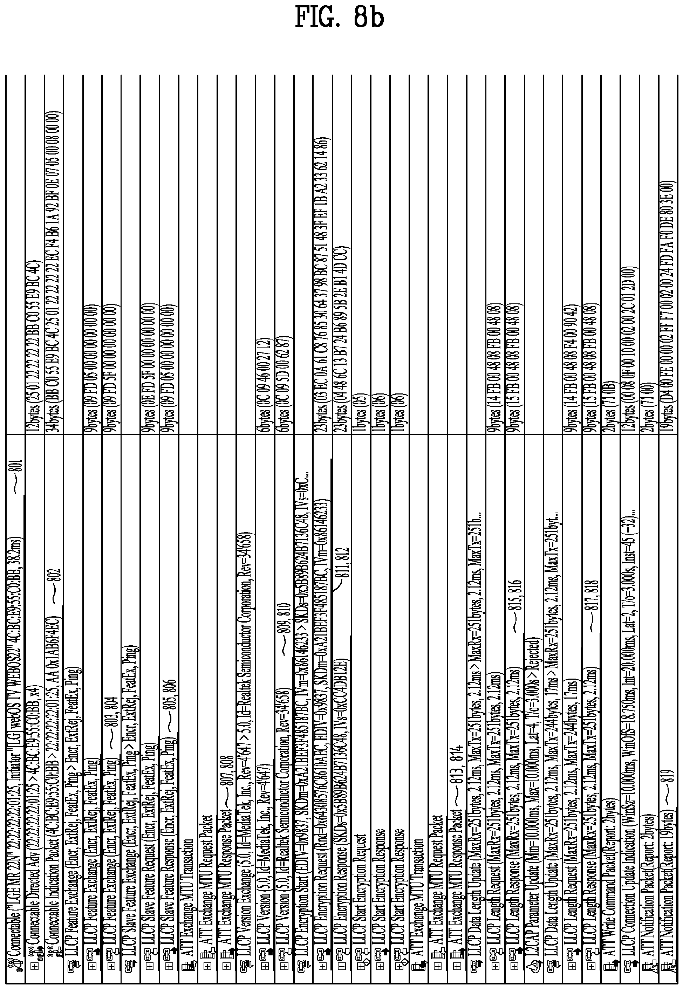

FIGS. 8A and 8B are diagrams illustrating a conventional connection flow between a remote control device and a display device.

In step S801, the remote control device may attempt a Bluetooth connection to the display device by performing high duty advertising. Herein, high duty advertising refers to transmitting a packet by which the remote control device as a slave device attempts to connect to the display device as a master device.

In step S802, the display device transmits a connection request including information for a Bluetooth connection to the remote control device to establish the Bluetooth connection. To transmit the connection request, the display device may transmit a packet requesting a connection to a device connected to an existing connected device among advertising packets to the remote control device.

In step S803, the display device may transmit a Link Layer Feature Request (LL_FEATURE_REQ) to the remote control device. LL_FEATURE_REQ refers to transmitting a packet requesting a list of functions supported by the remote control device by the display device.

Accordingly, in step S804, the remote control device may transmit a Link Layer Feature Response (LL_FEATURE_RSP) to the display device. LL_FEATURE_RSP refers to responding to the display device with a packet for the list of functions supported by the remote control device.

In step S805, the remote control device may transmit LL_SALVE_FEATURE_REQ to the display device. LL_SLAVE_FEATURE_REQ refers to transmitting a packet requesting a list of functions supported by the display device by the remote control device.

Accordingly, in step S806, the display device may transmit LL_SLAVE_FEATURE_RSP to the remote control device. LL_SLAVE_FEATURE_RSP refers to responding to the remote control device with a packet for the list of functions supported by the display device.

In step S807, the remote control device may transmit MTU Exchange REQ to the display device. MTU_Exchange REQ refers to transmitting a packet requesting a maximum receivable MTU size of the counterpart device.

Accordingly, in step S808, the display device may transmit MTU Exchange RSP to the remote control device. MTU_Exchange RSP refers to transmitting a packet that returns the maximum receivable MTU size.

In step S809, the display device may transmit LL_VERSION Exchange REQ to the remote control device. LL_VERSION Exchange REQ refers to transmitting a packet requesting a company, Bluetooth version information, and link layer version information.

Accordingly, in step S810, the remote control device may transmit LL_VERSION Exchange RSP to the display device. LL_VERSION Exchange RSP refers to responding with a packet indicating the company, the Bluetooth version information, and the link layer version information. The information exchanged in steps S809 and S810 may correspond to FIGS. 5(b) and 6(b).

In step S811, the display device may transmit LL_Encryption Start REQ to the remote control device. LL_Encryption Start REQ refers to transmitting a packet requesting for starting packet encryption.

Accordingly, in step S812, the remote control device may transmit LL_Encryption Start RSP to the display device. LL_Encryption Start RSP refers to responding with a packet indicating that packet encryption will start.

In step S813, the display device may transmit MTU Exchange REQ to the remote control device. MTU Exchange REQ refers to transmitting a packet requesting a maximum receivable MTU size of the counterpart device.

Accordingly, in step S814, the remote control device may transmit MTU Exchange RSP to the display device. MTU Exchange RSP refers to responding with a packet indicating the maximum receivable MTU size.

In step S815, the remote control device may transmit LL_LENGTH_REQ to the display device. LL_LENGTH_REQ refers to transmitting a packet requesting a maximum payload length of a packet.

Accordingly, in step S816, the display device may transmit LL_LENGTH_RSP to the remote control device. LL_LENGTH_RSP refers to responding with a packet indicating the maximum payload length of the packet.

In step S817, the display device may transmit LL_LENGTH _REQ to the remote control device. LL_LENGTH_REQ refers to transmitting a packet requesting a maximum payload length of a packet.

Accordingly, in step S818, the remote control device may transmit LL_LENGTH_RSP to the display device. LL_LENGTH_RSP refers to responding with a packet indicating the maximum payload length of the packet.

After the Bluetooth connection between the remote control device and the display device is completed through steps S803 to S816, the remote control device may output an IR signal in step S819.

FIG. 8B is a diagram illustrating information transmitted and received between a display device and a remote control device during the Bluetooth connection process between the display device and the remote control device described above with reference to FIG. 8A.

That is, FIG. 8B illustrates high-duty advertising information 801 transmitted from the remote control device to the display device, connection request information 802 transmitted from the display device to the remote control device, supported function list information 803, 804, 805, and 806 transmitted and received between the display device and the remote control device, maximum receivable MTU size information 807, 808, 813, and 814, version information 809 and 810, encryption start information 811 and 812, packet payload length information 817 and 818, and motion data information 819 transmitted from the remote control device to the display device.

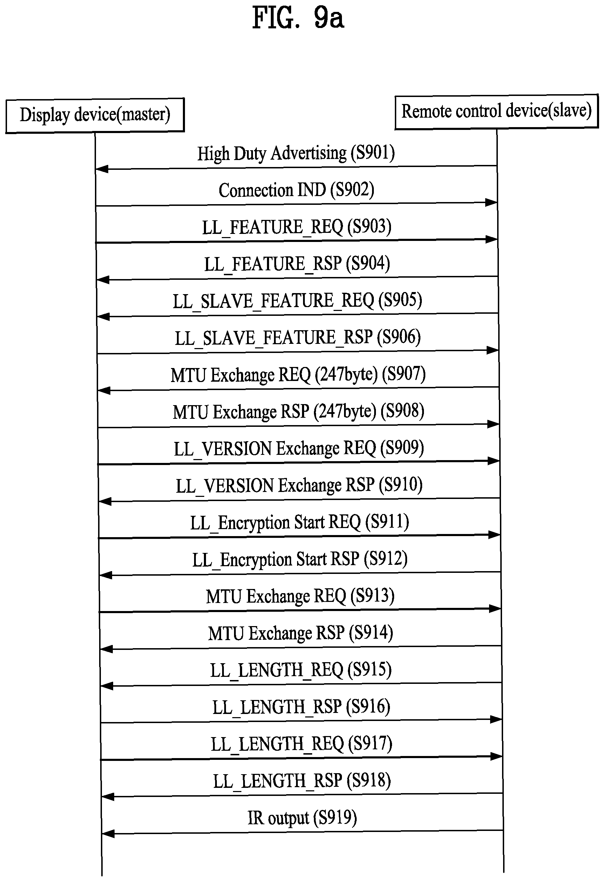

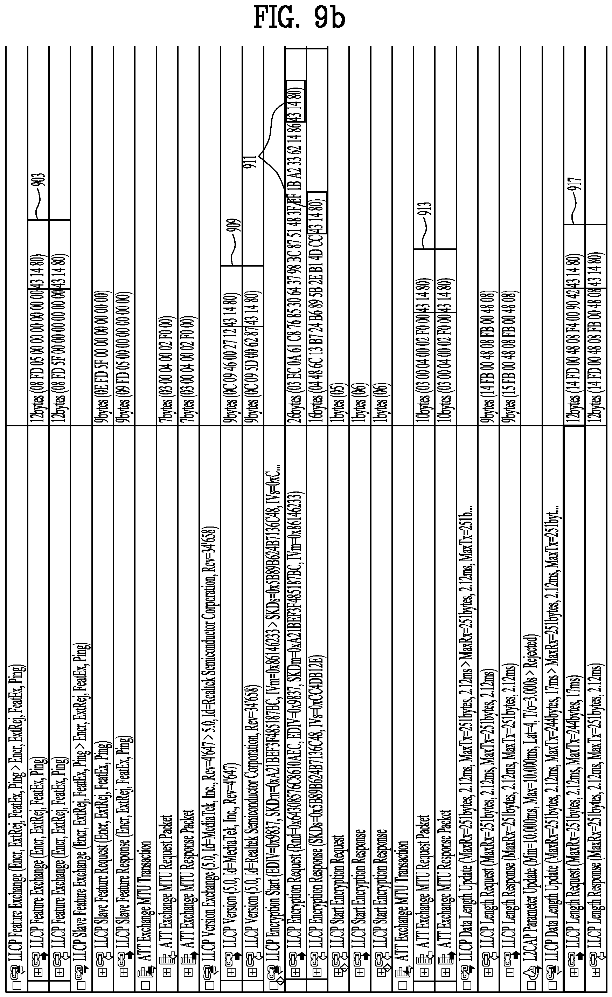

FIGS. 9A and 9B are diagrams illustrating a connection flow between a remote control device and a display device according to an embodiment of the present disclosure. A redundant description to the above description will be omitted.

Although the embodiment of FIG. 9A focuses on a transmitting operation, it is obvious that it may include a reception operation of the counterpart device.

Further, FIG. 9A illustrates operations of a display device as a master device and a remote control device as a slave device, for a Bluetooth connection, and it is obvious that an embodiment of the present disclosure may include only some of the operations illustrated in FIG. 9A or additionally include other general operations essential for a Bluetooth connection.

The basic operations of steps S901 to S918 of FIG. 9A are the same as those of FIG. 8A described above. However, there is a difference in the content of information transmitted and received between the display device and the remote control device.

That is, information included in steps S903, S909, S911, S913, and S917 for transmitting from the display device to the remote control device may include connection and configuration information about an STB.

More specifically, since the display device may identify information about the STB connected to an external input, it may transmit this information to the remote control device.

That is, the display device and the remote control device transmit and receive various pieces of information for the Bluetooth connection. When the display device transmits the connection and configuration information about the STB to the remote control device in advance, the remote control device may directly decode a key index, using a stored database, without repeatedly receiving it from the display device, as described before.

To this end, in an embodiment of the present disclosure, the display device may transmit information such as FIG. 9B to the remote control device during the Bluetooth connection process between the display device and the remote control device.

Referring to FIG. 9B, LL_FEATURE_REQ information transmitted from the display device to the remote control device in step S903 of FIG. 9A may further include STB connection and configuration information 903, LL_VERSION Exchange_REQ information transmitted from the display device to the remote control device in step S909 of FIG. 9A may further include STB connection and configuration information 909, LL_Encryption Start_REQ information transmitted from the display device to the remote control device in step S911 of FIG. 9A may further include STB connection and configuration information 911, MTU Exchange_REQ information transmitted from the display device to the remote control device in step S913 of FIG. 9A may further include STB connection and configuration information 913, and LL_LENGTH_REQ information transmitted from the display device to the remote control device in step S917 of FIG. 9A may further include STB connection and configuration information 917.

Further, including the STB connection and setup information in all information included in steps S903, S909, S911, S913, and S917 is an example, and the STB connection and setup information may be included only in at least one of steps S903, S909, S911, S913, and S917.

That is, as the connection and configuration information about the STB is included in information transmitted from the display device to the remote control device for the Bluetooth connection, even if the remote control device does not receive a key index from the display device when receiving a key input, it may perform decoding immediately.

Further, the Bluetooth-based remote control device may identify whether the above-described embodiment is used by analyzing a packet using airlog capture equipment.

The present disclosure may be implemented as code that can be written to a computer-readable recording medium and can thus be read by a computer. The computer-readable recording medium may be any type of recording device in which data can be stored in a computer-readable manner. Examples of the computer-readable recording medium include a hard disk drive (HDD), a solid state drive (SSD), a silicon disk drive (SDD), a ROM, a RAM, a CD-ROM, a magnetic tape, a floppy disk, optical data storage, and a carrier wave (e.g., data transmission over the Internet). In addition, the computer may include the controller. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

An embodiment of a display device, a method of controlling the display device, and a method of controlling a remote control device that controls the display device according to the disclosure may be repeatedly implemented, and thus its industrial applicability is acknowledged.

## Claims

1. A display device comprising:
a display outputting content;
a communication unit communicating with a remote control device by Bluetooth; and
a controller controlling the communication unit,
wherein upon receipt of a connection request from the remote control device, the controller transmits an ack response including connection and configuration information about a set-top box.

2. The display device according to claim 1, wherein the connection and configuration information about the set-top box includes a codeset identification (ID) of the set-top box.

3. The display device according to claim 2, wherein the remote control device includes a database, and the database has a key index mapped to an input key included in the remote control device.

4. The display device according to claim 3, wherein the controller controls the content based on an IR signal from the remote control device controlling the set-top box.

5. A method of controlling a display device, comprising:
receiving high duty advertising from a remote control device;
transmitting a Bluetooth connection request to the remote control device; and
transmitting an ack response including connection and configuration information about a set-top box to the remote control device.

6. The method according to claim 5, wherein the connection and configuration information about the set-top box includes a codeset identification (ID) of the set-top box.

7. The method according to claim 6, wherein the remote control device includes a database, and the database has a key index mapped to an input key included in the remote control device.

8. A method of controlling a remote control device, comprising:
receiving an interrupt from a user;
requesting a connection to the display device in response to the interrupt;
receiving an ack response including connection and configuration information about a set-top box from the display device;
decoding a key index based on the connection and configuration information about the set-top box; and
outputting an IR signal corresponding to the key index.

9. The method according to claim 8, wherein the connection and configuration information about the set-top box includes a codeset identification (ID) of the set-top box.

10. The method according to claim 9, wherein the remote control device includes a database, and the database has a key index mapped to an input key included in the remote control device.
